(19) Europäisches Patentamt
European Patent Office
Office européen des brevets

(11) EP 0 980 343 B1

(12) # EUROPEAN PATENT SPECIFICATION

(45) Date of publication and mention of the grant of the patent:
**01.02.2006 Bulletin 2006/05**

(21) Application number: **98921919.1**

(22) Date of filing: **06.05.1998**

(51) Int Cl.:
***C03C 25/10*** (2006.01) ***G02B 6/44*** (2006.01)
***C09D 11/10*** (2006.01)

(86) International application number:
**PCT/NL1998/000254**

(87) International publication number:
**WO 1998/050317 (12.11.1998 Gazette 1998/45)**

(54) **RADIATION-CURABLE INK COMPOSITION**
STRAHLUNGSHÄRTBARE TINTENZUSAMMENSETZUNG
COMPOSITION D'ENCRE DURCISSABLE PAR EXPOSITION A UN RAYONNEMENT

(84) Designated Contracting States:
**DE FR GB IT NL**

(30) Priority: **06.05.1997 US 45746 P**
**30.12.1997 NL 1007933**

(43) Date of publication of application:
**23.02.2000 Bulletin 2000/08**

(60) Divisional application:
**03078781.6 / 1 408 017**

(73) Proprietor: **DSM IP Assets B.V.**
**6411 TE Heerlen (NL)**

(72) Inventors:
- **ZAHORA, Edward, Paul**
  **Naperville, IL 60564 (US)**
- **MURPHY, Edward, Joseph**
  **Arlington Heights, IL 60005 (US)**
- **SZUM, David, Michael**
  **Elmhurst, IL 60126 (US)**
- **VAN DEN BURG, Johannes, Cornelis**
  **NL-3151 CV Hoek van Holland (NL)**

(56) References cited:
**EP-A- 0 615 980** **EP-A- 0 699 933**
**WO-A-90/13579** **WO-A-97/18493**
**WO-A-97/19029** **FR-A- 2 672 699**
**GB-A- 2 259 704**

- **KOLESKE J.V.: 'A RADIATION CURE PRIMER' JOURNAL OF COATING TECHNOLOGY vol. 69, no. 866, March 1997, pages 29 - 38**

Remarks:
The file contains technical information submitted after the application was filed and not included in this specification

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 980 343 B1

## Description

The invention relates to a radiation curable ink composition, a method for preparing a coated and colored optical glass fiber, a coated and colored optical glass fiber, and a ribbon-assembly comprising such coated and colored optical glass fibers.

Optical glass fibers are generally coated with two superposed radiation-cured coatings, which together form a primary coating. The coating which is in direct contact with the glass is called the inner primary coating and the overlaying coating(s) is called the outer primary coating. The inner primary may also be called the primary coating; then, the outer primary coating is called the secondary coating. Both definitions are used interchangeably.

The inner primary coating is usually a relatively soft coating providing environmental protection to the glass fiber and resistance, inter alia, to the well-known phenomenon of microbending. Microbending in the coated fiber can lead to attenuation of the signal transmission capability of the coated fiber and is therefore undesirable. The outer primary coating(s), which is on the exposed surface of the coated fiber, is typically a relatively harder coating designed to provide a desired resistance to physical handling forces, such as those encountered when the fiber is cabled.

In telecommunications applications of optical fibers, multiple individual strands of coated fiber must be packaged into larger structures such as ribbons and cables to maximize efficiency. However, after ribboning and cabling of fiber, the individual strands of fiber must be readily distinguishable from each other so they can be accurately identified during, for example, installation and repair. Cable geometry and/or color coding can be used to distinguish and identify individual fibers in a complex cable. Although several methods can be used to color code fiber, color coding can be done advantageously with either a thin ink layer (< 10 microns) which is placed over the coated fiber before ribboning and cabling or by using a colored outer primary coating.

Tape-like optical fiber ribbons are prepared by embedding a plurality (e.g., 4 to 12) of individual color coded fibers in a supporting matrix material which, like the inner and outer primary coatings, is also radiation-curable to maximize production speed. The matrix material can encase the color coded optical glass fiber or the matrix material can edge-bond the glass fibers together. Cure of the matrix material occurs during the ribboning stage after the fibers have been color coded by ink. Hencer, in a ribbon design, the ink layer resides between the ribbon's matrix material and the fibers' outer primary coating. This means that the ink layer's interfacial characteristics (e.g., surface energy, adhesion) must be carefully controlled to function properly with both matrix material and outer primary coating in the ribbon structure. In particular, the ability of a cured matrix material to be suitably stripped off the ink layer (break-out) is an important technical consideration. Ribbon break-out is generally carried out by a mechanical force, although chemical softening of the matrix with use of solvents is also known.

Optical fiber color coding can be based on up to 12 or more colors. Although optical fiber inks were originally solvent-based or thermosetting inks, in more recent times, radiation-curable inks have been used to increase the speed of the inking process. In these ink compositions, pigment is dispersed in a radiation-curable carrier or base composition.

As the demand for coated optical glass fibers has increased, manufacturers must respond by adding more fiber drawing production lines and by attempting to increase the linear line speeds of the existing fiber drawing production lines. In the latter case, one factor which will determine the upper limit for the line speed will be the curing rate characteristics of the radiation-curable ink composition, for a given radiation source and intensity.

If the line speed is increased to the extent that cure rate time requirements of the radiation-curable ink composition are not provided, the radiation-curable ink composition will not have received a sufficient amount of radiation to cause complete cure, or cross-linking, of the radiation-curable ink composition. The production linear line speed is generally inversely related to the amount of radiation striking the optical glass fiber. That is, as the production line speed is increased the amount of radiation exposure to the radiation-curable ink composition during the production process will necessarily decrease for a given radiation source. Incomplete cure of the radiation-curable ink composition is undesirable and must be avoided because then the desired properties of the incompletely cured ink coating may not be achieved and/or the incompletely cured ink coating may retain tackiness (giving problems in subsequent handling) or a malodorous odor may be present, and there may also be an increase in the extractables (undesirable) in the supposedly-cured ink coating.

In general, radiation-curable ink coating compositions can cure at a significantly slower rate than radiation-curable outer primary coating compositions. It is believed that the pigments present in ink compositions contribute to the slower cure speed of ink coatings. Thus, there is a need for improving the cure speed of the ink coating.

While the ink composition must have a very fast cure speed to ensure complete cure of the ink coating on the high speed drawing units, the increase in cure speed should not come at the expense of other important properties of the ink coating, such as providing suitable break-out performance. Break-out performance is the ability of the cured ink coating to separate from the matrix material without separating the ink layer from the outer primary coating to provide mid-span access to the individual coated optical glass fibers contained within the ribbon-assembly. Mid-span access is access to the coated optical glass fibers at a portion of the ribbon assembly between the ends of the ribbon assembly. Therefore, there is a need for a radiation-curable ink composition that exhibits adaptable adhesion properties to provide

an adhesion between the outer primary coating and the ink coating that is greater than the adhesion between the ink coating and the matrix material to provide mid-span access.

In addition, ink compositions should not contain ingredients that can migrate to the surface of the optical glass fiber and cause corrosion. The ink composition should also not contain ingredients which can cause instability in the protective coatings or matrix material. Ink coatings for optical glass fibers should be color fast for decades, not cause attenuation of the signal transmission, be impervious to cabling gels and chemicals, and allow sufficient light penetration for fiber core alignment.

Analogous requirements exist for colored outer primary coatings. In particular, these coatings require high cure speed despite the presence of pigments, good break-out properties, good adhesion to the inner primary coating, and the coating should contain no ingredients that may cause attenuation of light through the glass fiber after prolonged exposure of the ribbon to moist, heat, etc.

From the above, it is clear that optical glass fiber technology places many unique demands on radiation-curable colored compositions which more conventional technologies, such as printing inks, do not.

U.S. patent No. 4,629,285 discloses a method for making an ink coating on a coated optical glass fiber in which a UV curable ink is applied to a coated optical glass fiber. The ink coating is applied in a method that preserves the concentricity of the optical glass fibers. The preferred inks are pigmented semi-opaque UV curable polymeric inks. However, the ink compositions disclosed in this patent do not have a sufficiently fast enough cure speed to be used on modern high speed optical glass fiber drawing and coating towers.

Published Japanese Patent Application No. H1-152405 discloses a radiation-curable ink composition containing an organic polysiloxane compound. The polysiloxane compound provides the ink coating with the ability to separate more easily from the matrix material in a ribbon assembly.

Published Japanese Patent Application No. 64-22976 discloses radiation-curable ink compositions containing specific radiation-curable oligomers. The ink composition provides an ink coating having adhesion to the outer primary coating which is separable from the matrix material in a ribbon assembly.

Patent application EP-A-614099 describes the-use of a release agent such as a silicon oil or a fluororesin between the bundling layer and the coloring layer. In particular, when substantial amounts of silicone resins are used, incompatibility in the liquid and resultant imperfections in the cured matrix composition may result, which causes attenuation of light.

Usually ink compositions must be cured in an inert atmosphere, i.e. in the absence of oxygen. Providing inert atmospheres oil optical glass fiber drawing towers is expensive. Thus, a radiation-curable ink composition which exhibits a high cure speed in the presence of some oxygen like in an air atmosphere would provide significant advantages over ink compositions that must be cured in an inert atmosphere.

An objective of the present invention is to provide ribbon assemblies having suitable break-out performance, without requiring the use of substantial amounts of a silicone agent in the ink composition.

Another objective of the present invention is to provide radiation-curable ink compositions which are adapted to provide cured ink coatings having greater adhesion to the outer primary coating than to a matrix material, to provide the ribbon assembly with the capability of break-out of the individual coated optical glass fibers.

A further objective of the present invention is to provide high speed radiation-curable ink compositions which provide enhanced cure speed in the presence of air.

Another objective of the present invention is to provide an ink composition which exhibits enhanced adhesion to the outer primary coating when suitably cured.

Other objectives of the present invention are to provide an optical glass fiber coated with the ink composition and a ribbon assembly containing at least one of the coated optical glass fibers.

Provided by the present invention is a radiation-curable ink coating composition comprising

a) an oligomer
b) a reactive diluent
c) a homolytic photoinitiator
d) a pigment, and
e) additives

wherein the composition comprises more than about 1 wt.% homolytic photoinitiator in combination with a benzophenone-type compound, as defined in claim 1 and dependent claims 2-9. Also provided by the present invention is a method for curing the radiation curable ink composition as defined in claim 10, a coated and colored optical glass fiber as defined in claims 11-14 and a ribbon assembly as defined in claim 15. The novel ribbon assembly has the capability of providing break-out of color coded optical glass fibers from the ribbon assembly, the ribbon assembly comprising a plurality of coated optical glass fibers having an ink or colored secondary coating on at least one of the coated optical glass fibers; and a matrix material binding the plurality of coated optical fibers together.

This composition if suitably formulated, using the constituents a-e, can also be used as a colored outer primary coating.

Unexpectedly, this use of a benzophenone-type compound - if suitably cured - results in a system having a satisfactory adhesion to an outer primary coating and good break-out from the matrix material.

In DE-A-4007519, it is described to use photoinitiators in the curing of UV curable ink compositions on optical fibers. However, this reference does not teach to use the combination of a substantial amount of homolytic types of photoinitiators in combination with substantial amounts of benzophenone.

The radiation-curable ink compositions comprise two functional components: a pigment system which functions to impart color and a radiation-curable carrier system which functions to allow the pigment system into a coherent, high-quality film after radiation-cure. Typically, a carrier system will be mixed with a pigment system to form the radiation-curable ink.

Ink coatings are usually about 3 to about 10 microns thick, and should be concentric to prevent attenuation of the signal transmission. The ink coating also generally has a $T_g$ of at least about 30°C, more preferably at least about 50°C.

Colored outer primary coatings, generally are 10-30 μm thick, and are described e.g. in EP-B-473643.

Radiation-curable carrier systems which are suitable for forming the present ink composition contain one or more radiation-curable oligomers and monomers having at least one functional group capable of polymerization when exposed to actinic radiation. Suitable radiation-curable oligomers or monomers are now well known and within the skill of the art.

The coated optical glass fibes each have an ink coating for identifying the individual fibers. The level of adhesion between the ink coating and the matrix material has been adjusted to be less than the level of adhesion between the ink coating and the seconday coating on the optical glass fiber, which provides the functional capability of providing break-out of the individual coated optical glass fibers.

Ink compositions according to the present invention may show a certain percent reacted acrylate unsaturation ("% RAU") by selecting monomers, oligomers and a photoinitiator which provide a %RAU", when exposed to about 0.125 J/cm$^2$ UV radiation, such that the level of adhesion between the ink coating and the matrix material is less than the level of adhesion between the ink coating and the outer primary coating. Preferably, the average %RAU is at least 70%, more preferably at least about 75%, and most preferably at least about 80%, when cured in the presence of an oxygen containing gaseous atmosphere, like air. Preferably, the average %RAU is at least 75%, more preferably at least about 80%, and most preferably at least about 85%, when cured in an inert (e.g. nitrogen) atmosphere. The average %RAU should be based on the %RAU of at least four different color ink coating compositions, each having the same radiation-curable carrier system. Preferably, the %RAU is based on at least 6, more preferably at least 12, different color ink coating compositions.

Preferably, all three carbon containing compounds "Ar" in the homolytic photoinitiator according to formula (1) in claim 6 have a molecular weight and molecular structure that is suitable for forming the above free-radicals. For example, the carbon containing compounds can have from about 5 to about 15 carbon atoms. Suitable examples of the carbon containing compounds include a furane ring or a benzene ring.

One or more of the hydrogens present on the aromatic ring can be substituted, for example, with alkyl and/or alkoxy groups. Examples of suitable alkyl substituents include methylene, ethylene, butylene and propylene groups. Examples of suitable alkoxy substituents include methoxylate, ethoxylate, butoxylate and propoxylate groups.

A preferred cure speed enhancing photoinitiator includes one represented by the following formula (2) :

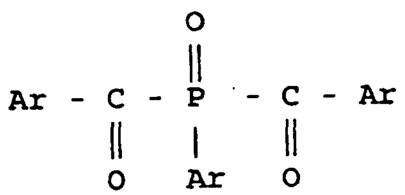

(2)

wherein Ar is a phenyl group, optionally substituted with one to three alkyl groups having 1-4 carbon atoms.

Suitable amounts of the photoinitiator according to formula (1) in claim 6 are from about 1 to about 25 weight%, preferably from about 1.5 to about 20 weight%, and most preferably from about 4 to about 15 weight%, based on the total weight of the ink composition. In general, if other photoinitiators are present in the ink composition in combination with the ink cure speed enhancing photoinitiator, the ink cure speed enhancing photoinitiator can be used in lesser amounts to provide the desired cure speed.

Ink coatings are usually about 3 to about 10 microns thick, and should be concentric to.prevent attenuation of the signal transmission. The ink coating also generally has a Tg of at least about 30°C, more preferably at least about 50°C.

Commonly, the radiation-curable functionality used is ethylenic unsaturation, which can be polymerized through radical polymerization or cationic polymerization.

A suitable radiation-curable ink composition essentially consists of from about 1 to about 80 weight % of at least one radiation-curable oligomer (a). Preferred amounts of the radiation-curable oligomer include from about 20 to about 70 % by weight, based on the total weight of the ink composition.

A mixture of mono-, di-, tri-, tetra-, and higher functionalized oligomers can be used to achieve the desired balance of properties, wherein the functionalization refers to the number of radiation-curable functional groups present in the oligomer.

The oligomers usually comprise a carbon-containing backbone structure to which the radiation-curable functional group(s) are bound. Examples of suitable carbon-containing backbones include polyethers, polyolefins, polyesters, polyamides, and polycarbonates. The size of the carbon-containing backbone can be selected to provide the desired molecular weight. The number average molecular weight of the oligomer is usually between about 500 to about 10,000, preferably between about 500 to about 7,000, and most preferably between about 1,000 to about 5,000.

For example, the carbon-containing backbone of the oligomer can comprise aromatic groups and ring-opened epoxy groups or alkoxy groups. The oligomer can be represented by, for example:

R-Ar-R;

or

R-L-Ar-L-R

where R is a radiation-curable functional group,
Ar is an aromatic group containing moiety, and
L is a linking group.

Examples of suitable linking groups include alkoxy or ring opened epoxy such as ethoxy, propoxy, butoxy, and repeat units thereof. L can also be a urethane or urea linking group.

The aromatic groups can be, for example, derived from bisphenol units, such as bisphenol A. A preferred oligomer is a diglycidyl ether derivative of bisphenol A to which acrylate functional groups have been bound. A commercially available example of such an oligomer is Ebecryl 3700 (UCB) or CN-120 (Sartomer), the latter having a molecular weight of about 1300, and when cured has a Tg of about 65°C.

Another example of a preferred oligomer is a trifunctional polyether or polyester having a molecular weight of about 500 to about 5000. A preferred example.of a trifunctional oligomer is the commercially available polyurethane triacrylate Ebecryl 264, which has a molecular weight of about 2000 and when cured a Tg of about 42°C.

The radiation-curable carrier systems may also contain a reactive diluent (b) which is used to adjust the viscosity. The reactive diluent can be a low viscosity monomer containing having at least one functional group capable of polymerization when exposed to actinic radiation. This functional group may be of the same nature as that used in the radiation-curable monomer or oligomer. Preferably, the functional group present in the reactive diluent is capable of copolymerizing with the radiation-curable functional group present on the radiation-curable monomer or oligomer.

A suitable radiation-curable ink composition essentially consists of from about 1 to about 80 weight % of at least one radiation-curable diluent. Preferred amounts of the radiation-curable diluent include from about 5 to about 60 % by weight, more preferably from about 10 to about 50 % by weight, based on the total weight of the ink composition.

Preferably, compound b) is a reactive diluent or a mixture thereof. Generally, each reactive diluent has a molecular weight of less than about 550 and a viscosity of less than about 500 mPa.s

For example, the reactive diluent can be a monomer or mixture of monomers having an acrylate or vinyl ether functionality and a C4-C20 alkyl or polyether moiety.

Particular examples of such reactive diluents include: hexylacrylate, 2-ethylhexylacrylate, isobornylacrylate, decylacrylate, laurylacrylate, stearylacrylate, 2-ethoxyethoxy-ethylacrylate, laurylvinylether, 2-ethylhexylvinyl ether, N-vinyl formamide, isodecyl acrylate, isooctyl acrylate, N-vinyl caprolactam, N-vinylpyrrolidone, and the like.

Another type of reactive diluent that can be used is a compound having an aromatic group. Particular examples of reactive diluents having an aromatic group include: ethyleneglycolphenylether-acrylate, polyethyleneglycolphenylether-acrylate, polypropyleneglycolphenylether-acrylate, and alkylsubstituted phenyl derivatives of the above monomers, such as polyethyleneglycolnonylphenyletheracrylate.

The reactive diluent can also comprise a diluent having two or more functional groups capable of polymerization. Particular examples of such monomers include:

$C_2$-$C_{18}$ hydrocarbon-dioldiacrylates,
$C_4$-$C_{18}$ hydrocarbondivinylethers,

$C_3$-$C_{18}$ hydrocarbon triacrylates, and the polyether analogues thereof, and the like, such as
1,6-hexanedioldiacrylate,
trimethylolpropanetri-acrylate,
hexanedioldivinylether,
triethylene-glycoldiacrylate,
pentaerythritol-triacrylate,
ethoxylated bisphenol-A diacrylate, and
tripropyleneglycol diacrylate.

Preferably, alkoxylated aliphatic polyacrylates are used, such as ethoxylated hexanedioldiacrylate, propoxylated glyceryl triacrylate or propoxylated trimethylolpropanetriacrylate.

At least one of the photoinitiators c) used in the ink coating composition of the present invention is a homolytic fragmentation photoinitiator which operates by intramolecular bond cleavage.

A suitable radiation-curable ink composition essentially consists of from about 1 to about 20 weight% of a homolytic photoinitiator. Preferred amounts of the homolytic photoinitiator are from greater than 3 to about 15% by weight, more preferably from about 4 to about 12% by weight.

As a pigment is present in the composition according to the invention, it is preferred (also for colored outer primary coating compositions) to use as photoinitiator an acyl phosphine oxide photoinitiator, such as defined in claims 6 and 7, more specifically a benzoyl diaryl phosphine oxide photoinitiator. Examples of suitable benzoyl diaryl phosphine oxide photoinitiators include: 2,4,6-trimethylbenzoyldiphenyl-phosphine oxide (Lucirin TPO by BASF), and bis(2,6-dimethoxybenzoyl)-2,4,4-trimethylpentyl-phosphine oxide (Irgacure 1700 by Ciba Geigy).

For an optimum cure speed in the presence of pigment, it is advantageous to combine an acyl phosphine oxide photoinitiator with one or more other photoinitiators, such as hydroxy-cyclohexylphenyl-ketone.

Any inorganic and organic pigment (d) that is suitable for making radiation-curable ink compositions can be used in the present invention. However, because white pigments usually do not absorb significant amounts of the radiation used to cure the ink composition, white ink compositions do not usually require the use of the ink cure speed enhancing photoinitiator according to the present invention. Therefore, the preferred pigments are pigments that absorb light of a visible wave length, i.e. any color except pure white. The use of the term "pigment" refers to both inorganic and organic pigments.

Preferably, the pigment used in the ink coating composition of the present invention is an organic pigment. The pigment can be present in the ink composition in an amount that provides coloration that is visible without magnification to facilitate identification of the individual colored optical glass fiber.

Ribbon assemblies utilizing 12 or less coated optical glass fibers require only 12 colors to adequately distinguish each of the coated optical fibers from one another. However, in larger ribbon assemblies, more than 12 colors may be utilized to adequately distinguish the coated optical glass fibers from one another. Examples of twelve colors normally used for making ribbon assemblies include: black, white, yellow, blue, red, green, orange, brown, pink, aqua, violet, and gray.

Preferably, the pigment has a mean particle size of not more than about 1 $\mu$m. The particle size of the commercial pigments can be lowered by milling if necessary.

A specific example of a suitable black pigment includes carbon black.

A specific example of a suitable white pigment includes titanium dioxide.

Specific examples of suitable yellow pigments include diarylide yellow and diazo based pigments.

Specific examples of suitable blue pigments include phthalocyanine blue, basic dye pigments, and phthalocyanines.

Specific examples of suitable red pigments include anthraquinone (red), napthole red, monoazo based pigments, quinacridone pigments, anthraquinone, and perylenes.

Specific examples of suitable green pigments include phthalocyanine green and nitroso based pigments.

Specific examples of suitable orange pigments include monoazo and diazo based pigments, quinacridone pigments, anthraquinones and perylenes.

Specific examples of suitable violet pigments include quinacrinode violet, basic dye pigments and carbazole dioxazine based pigments.

Suitable aqua, brown, gray, and pink colors can easily be formulated by combining several pigments. One skilled in the art is able to form any color as desired by combining different pigments.

The pigment can be present in the ink composition in an amount that provides coloration that is visible without magnification to facilitate identification of the individual colored optical glass fiber. The amount of the pigment should not be so great as to significantly reduce the cure speed of the ink composition or result in other undesirable affects. Examples of suitable amounts of pigment have been found to be higher than about 1-25 weight %. Generally, the amount is less than 25 wt.%, preferably less than about 20 weight %, more preferably less than about 10 weight %, based on

the total weight of the ink composition.

Preferred amounts of each pigment are from about 0.5 to about 10 % by weight, more preferably from about 0.5 to about 5 % by weight. In colored outer primary coatings, generally lower amounts of pigments are sufficient to achieve good coloring.

Other additives which can be used in the radiation-curable carrier system include, but are not limited to, lubricants, wetting agents, antioxidants and stabilizers. The selection and use of such additives is within the skill of the art.

Coated optical fibers are often used in ribbon assemblies. Because of the versatility of the presently invented in ink coating composition, this composition is very well suited for use on coated optical glass fibers in ribbon assemblies. If necessary, a release agent can be added to the ink coating to allow easy access to the individual fibers by separating the matrix material from the ink coating, usually called break-out. However, preferably, no substantial amount of release agents is used. Suitable release agents include silicones, silicone acrylates, fluoro-carbon oils or resins and the like. If present, the ink coating composition for coating optical fibers used in ribbon assemblies comprises about 0.1 to about 20 wt.%, more preferably about 1 to about 10 wt. % of a suitable release agent, based on the total weight of the ink composition.

Useful additives e) of the ink coating are a small amount of lubricant to allow even better access to the individual fibers in separating the matrix material from the ink coating, usually called break-out. Suitable lubricants include silicones, fluoro-carbon oils or resins and the like. Reactive release agents such as silicone acrylates appear to have no further effect. Preferably, the ink coating composition for coating optical fibers used in ribbon assemblies comprises about 0.01 to about 5 wt %, more preferably about 0.1 to about 3 wt% of a suitable lubricant, based on the total weight of the ink composition.

Preferably, a silicon oil is used. Another lubricant compound can be present to a lesser extent.

The ink coating composition of the present invention comprises an effective amount of a benzophenone-type compound to achieve a better break-out of the matrix material from the coated and colored optical fiber. A suitable radiation-cured ink composition of this embodiment comprises more than about 2 weight % of a benzophenone-type compound.

Preferred amounts of the benzophenone-type compound are more than about 3 % by weight, and more preferably more than 3.5 % by weight, based on the total weight of the ink composition. The amount generally will be less than about 10 % by weight as use of more than about 10 % by weight of the benzophenone-type compound creates no particular advantage, and higher amounts are not recommended from economical point of view. Preferably, the ink composition comprises less than 8 wt.% of benzophenone-type compound.

Suitable benzophenone-type compounds are organic compounds with a molecular weight between 170 and 500, which consists essentially of a substituted benzophenone group. Suitable substituents are alkyl groups, acryl groups, aromatic groups, halogens, and the like. Suitable benzophenone-type compounds include benzophenone, chlorobenzophenone, methyl-o-benzoyl benzoate, 4-benzoyl-4'-methyldiphenylsulphide, acrylated benzophenone, 4-phenylbenzophenone, 3,3'-dimethyl-4-methoxybenzophenone, 4,4'-dimethylamino-benzophenone, and the like. Preferably, this benzo-phenone-type compound is not a ring-bonded benzophenone. Ring-bonded benzophenones such as thioxanthone or derivatives thereof, e.g. 2,4-diethyl- or 9-isopropyl-thioxanthone, appear to have little effect on the improvement of break-out properties.

The ink composition according to the present invention preferably comprises none, or a minor amount of amine compound, which would act as a hydrogen abstraction co-initiator for the benzophenone type compound.

Generally, less than 0,5 wt.% and preferably less than 0,1 wt.% of amine type hydrogen abstraction compound would be present in the composition of the present invention. Nevertheless, morpholino-type sensitizers can be present in amounts up to 4 wt.% but preferably less than 3 wt.%.

Based on the above, a suitable radiation-curable ink composition can be formulated from a composition containing:

from about 1 to about 20 weight % of at least one pigment that absorbs light of a visible wavelength;
from about 1 to about 25 weight % of at least one photoinitiator; and
from about 55 to about 98% of a radiation-curable carrier system containing at least radiation-curable monomer or oligomer, based on the total weight of the ink composition.

A preferred ink composition can be formulated from a composition containing:

from about 1 to about 20 weight % of at least one pigment which absorbs light of a visible wavelength;
from about 1 to about 80 weight % of at least one radiation-curable oligomer;
from about 1 to about 80 weight % of at least one radiation-curable diluent monomer; and
from about 1 to about 20 weight % of at least one ink cure speed photoinitiator, based on the total weight % of the ink composition.

Preferred amounts of the ink cure speed enhancing photoinitiator are from about 1.5 to about 20 weight %, more preferably from about 4 to about 15 weight %.

Preferred amounts of the radiation-curable oligomer include from about 10 to about 70% by weight, more preferably, about 20 to about 60% by weight, based on the total weight of the ink composition.

Preferred amounts of the radiation-curable diluent monomer include from about 10 to about 70% by weight, more preferably, about 20 to about 60% by weight, based on the total weight of the ink composition.

Preferably, the ink composition contains other photoinitiators in an amount of about 1 to about 20% by weight, more preferably about 1 to about 10% by weight, based on the total weight of the ink composition.

Radiation-cure of optical fiber inks can be executed with radiation sources which have characteristic emission outputs which will vary depending on the radiation source. Examplary radiation sources can be obtained from, for example, Fusion UV Systems Inc. or Iwasaki Denki Co. For example, so-called "D-lamps" and "H-lamps" can be used as a radiation source, wherein the D lamp is more rich in longer wavelength ultraviolet light emissions than the H lamp. A typical ultraviolet radiation source (e.g., medium pressure arc lamp) used in industrial production often has major emission lines near the 260, 300, 313, and 366 nm ranges, or more generally at about 250-270 nm, at about 290-320 nm, and at about 360-380 nm. In addition, there can be a line at about 390-410 nm. The characteristic bulb output used in the present invention can be measured by conventional methods or obtained from the supplier of the radiation source. Preferably, the ink composition of the present invention is cured by irradiation with both an H and a D lamp.

The colored coating compositions of the present invention preferably are cured with sufficient energy.to have less than 15% unreacted acrylate unsaturation. Suitable irradiation energy values are 0.05-2 J/cm$^2$ preferably 0.1-1.5 J/cm$^2$. More in particular, values below 0.5 J/cm$^2$ are particular preferred.

The present invention also provides an ink composition having enhanced adhesion to the outer primary coating when suitably cured. It has been found that surprisingly the adhesion of the ink coating to the outer primary coating can be approximated by how well a monomer present in the ink composition adsorbs in the outer primary coating. In general, the greater the adsorption of the monomer into the outer primary coating, the greater the adhesion of the cured ink coating to the outer primary coating.

If the ink coating separates from the outer primary coating during mid-span access to the individual optical glass fibers, the identification of the individual optical glass fibers can be difficult or even unattainable. Using the present invention, the adhesion of the ink coating to the outer primary coating can be easily adjusted to provide an ink coating having greater adhesion to the outer primary coating than to the matrix material to provide a ribbon assembly that is capable of providing mid-span access to the individual optical glass fibers while avoiding undesirable delamination of the ink coating from the outer primary coating during mid-span access.

Preferably, the monomer present in the ink composition exhibits an Outer Primary Adsorption Index of at least about 5, preferably at least about 7, and most preferably at least about 10.

The adsorption index of the monomer can be determined without undue experimentation by first preparing 75 micron thick drawdown of the outer primary coating to be coated by the ink composition. The drawdown is then suitably cured by exposure to radiation and then cut into 2 inch by 2 inch sample squares. The sample square is then submerged in the monomer present in the desired ink coating for 30 seconds under atmospheric pressure and room temperature (25°C). The amount of weight gain in the sample expressed as a percentage of the original weight of the sample is used to determine the outer primary adsorption index as follows.

Outer Primary Adsorption Index:

1 = .1% weight gain
2 = .2% weight gain
3 = .3% weight gain
4 = .4% weight gain
5 = .5% weight gain
6 = .6% weight gain
7 = .7% weight gain
8 = .8% weight gain
9 = .9% weight gain
10 = 1% weight gain

Thus, for an adsorption index of 5, the sample gained about .5% in weight after being submerged in the monomer for 30 seconds.

The amount of the monomer can be selected to provide the desired level of adhesion between the outer primary coating and the ink coating. In general, the greater the amount of a monomer having an adsorption index of at least about 5, the greater the adhesion between the outer primary coating and the ink coating. Suitable examples of such a monomer are from about 1 to about 20 wt. %, and preferably from about 1 to about 10 wt-%, based on the total weight

of the ink composition.

In producing a coated and colored optical fiber, a liquid coating composition is applied to a substrate and subsequently cured. The optical glass fibers are generally coated with two superposed radiation-cured coatings, which together form a primary coating. The inner primary coating is in direct contact with the glass and the outer primary coating is adjacent to the surface of the inner primary coating. The ink coating composition according to the present invention can be formulated to provide an ink coating having a good adhesion to the outer primary coating.

It is also possible to use a colored outer primary coating, which preludes the necessity of using an extra ink layer. The outer primary coating should adhere well to the inner primary coating, and the matrix material should show good break-out properties with respect to the colored outer primary coating, which can be achieved using the ink coating of the present invention as the colored outer primary coating.

The above embodiments can be used in combination to provide an improved radiation-curable ink composition which exhibits the combination of properties of:

(i) when suitably cured provides the ribbon assembly with the functional capability of providing break-out without delaminating the ink or colored coating from the outer resp. inner primary coating;
(ii) when suitably cured provides sufficient adhesion between the matrix material and the ink coating to resist delamination; and
(iii) exhibits an enhanced cure-speed in the presence of an oxygen containing atmosphere such that the colored coating can be formed at high speed without the need for providing an inert atmosphere.

The ink coating composition can be applied to the coated optical glass and cured using any suitable method. An example of a suitable method is disclosed in U.S. patent No. 4,629,285, the complete disclosure of which is incorporated herein by reference. The ink composition can also be applied in a manner similar to the application of the outer primary coating on an optical glass fiber drawing and coating tower.

Because of the versatility of the presently invented ink coating composition, this composition is very well suited for use on coated optical glass fibers in ribbon assemblies. Multiple individual strands of coated fiber are packaged into larger structures such as ribbons and cables to maximize efficiency. One skilled in the art will easily be able to use the disclosure provided herein to prepare a novel ribbon assembly containing at least one of the improved ink coated optical glass fibers for the desired applications. The novel ribbon assembly made according to this invention can be used in telecommunication systems. Such telecommunication systems typically include ribbon assemblies containing optical glass fibers, transmitters, receivers, and switches. The ribbon assembly containing the coated optical glass fibers are the fundamental connecting units of telecommunication systems. The ribbon assembly can be buried under ground or water for long distance connections, such as between cities. The ribbon assembly can also be used to connect directly to residential homes.

The novel ribbon assembly made according to this invention can also be used in cable television systems.

The ink compositions according to the present invention are surprisingly suitable for formulating radiation-curable colored coating compositions for forming protective and/or decorative coatings having a thickness greater than about 10 microns, and up to about 50 microns. While ink coatings on optical glass fibers usually have a thickness of about 3 to about 10 microns, the cure speed of the ink compositions according to the present invention have been described above using a thickness of 20 microns. Thus, at the thinner thicknesses usually used for forming an ink coating on an optical glass fiber, such as from about 3 to about 10 microns, the MEK rub value will be significantly greater than the MEK rub value measured at a 20 micron thickness. In general, as the thickness of the ink coating is increased, the cure speed decreases.

Thicker colored coatings tend to have a decreased concentration of pigment, based on the total weight of the colored coating, compared to ink coating. Because the colored coating is applied in at a thickness greater than ink coatings, a lower concentration of pigment is required to obtain the desired color.

The colored coating composition exhibits an enhanced cure speed and therefore is commercially feasible for use on high speed production lines, such as for appliances. The colored coating composition is also suitable for application to aircraft and automobile parts.

The invention will be further explained by way of the following examples, without being limited thereto.

<u>Example I</u>

A radiation-curable base composition was first formed by combining the components shown in Table 1.

Table 1

| Component | Amount (% by weight of total composition) |
|---|---|
| Ethoxy Diacrylate Monomer[1] | 42.85 |
| Aliphatic Urethane Diacrylate Oligomer[2] | 25.25 |
| Pentaerythritol Tetra-acrylate | 12.55 |
| 1,6-Hexanediol Diacrylate | 1.68 |
| Isobornyl Acrylate | 3.88 |
| Phenoxy Ethyl Acrylate | 3.88 |
| Butylhydroxy Toluene | 0.52 |
| Benzophenone | 8.33 |
| 2-Methyl-1-(4-(Methylthio)-phenyl)-2-(4-Morpholinyl)-1-Propanone | 1.04 |

[1] CN120, (Sartomer)

[2] Ebecryl 264, (Radcure)

96% of this base composition was then combined with the 4% of CGI 819 (Ciba Geigy) to form a radiation-curable composition. 88 wt.% of the radiation-curable composition was combined with 9 wt.% of blue, and 3 wt.% of white pigment to form a radiation-curable ink composition.

A 20 micron thick drawdown of the ink compositions was formed on a mylar film and then exposed to 0.1 J/cm$^2$ UV light to form a sample film.

The following properties of the sample film was tested:

(1) MEK rub;
(2) Unreacted Coating; and
(3) Undercut.

The MEK rub test represents the degree of cross-linking that occurred in the sample. In general, the greater the number of rubs required to disintegrate the sample, the greater the degree of cross-linking, and the faster the ink composition cured.

The unreacted coating test was a visible test for the presence of uncured coating on the sample. The presence of uncured coating signifies that a higher radiation dose may be required or that more of the cure speed enhancing photoinitiator is required to further increase the cure speed so that the ink composition is suitably cured at the selected radiation dose.

The undercut test denotes whether the sample disintegrated after the MEK rub test.

The test sample showed 200 MEK (rubs), no unreacted composition and no undercut.

<u>Example II and III, and Comparative Example A</u>

Two radiation-curable carrier systems were first formed by combining the components shown in Tables 2 and 3.

<u>Table 2</u> Carrier System AA

| Component | Amount (% by weight of total system) |
|---|---|
| Epoxy Acrylate Monomer | 33.9 |
| Aliphatic Urethane Diacrylate Oligomer | 19.9 |
| Pentaerythritol Tetra-acrylate | 9.95 |
| Isobornyl Acrylate | 3.06 |
| Phenoxy Ethyl Acrylate | 3.06 |
| 1,6-Hexanediol Diacrylate | 13.64 |
| Silicone Diacrylate | 1.14 |

Table continued

| Component | Amount (% by weight of total system) |
|---|---|
| 2,6-di-tert-Butyl-Methyl-Phenol | 0.57 |
| 2-Methyl-1-(4-(Methylthio)phenyl)-2-(4-Morpholinyl)-1-Prapanone | 4.55 |
| Ink Cure Speed Enhancing Photoinitiator CGI 819 | 1.14 |
| Acrylated Benzophenone | 9.09 |

Table 3 Carrier System BB

| Component | Amount (% by weight of total system) |
|---|---|
| Epoxy Acrylate monomer | 35.93 |
| Aliphatic Urethane Diacrylate Oligomer | 21.14 |
| Pentaerythritol Tetra-acrylate | 10.55 |
| Isobornyl Acrylate | 3.24 |
| Phenoxy Ethyl Acrylate | 3.24 |
| 1,6-Hexanediol Diacrylate | 11.52 |
| Silicone Diacrylate | 2.31 |
| 2,6-di-tert-Butyl-Methyl-Phenol | 0.58 |
| Phosphine Oxide, Di-Phenyl(2,4,6-Trimethyl Benzoyl) | 11.52 |

The radiation-curable carrier system AA was combined with the pigments shown in Table 4 to form radiation-curable ink compositions. The radiation-curable carrier system BB was combined with the pigments shown in Table 5 to form radiation-curable ink compositions. For comparison, commercially available ink coating compositions shown in Table 6 were utilized (comparison experiment A).

20 micron thick drawdowns of the ink compositions were formed on mylar films and then exposed to 0.1 J/$cm^2$ UV light to form sample films. The properties of the films was tested and the results are shown in Tables 4 through 6.

Table 4

| Component (weight % based on total weight of composition) | White | Red | Violet | Yellow | Rose | Black | Slate | Orange | Blue | Green | Brown | Aqua |
|---|---|---|---|---|---|---|---|---|---|---|---|---|
| Radiation-Curable Carrier System (A) | 86.37 | 78.14 | 83.77 | 79.80 | 83.00 | 89.29 | 88.27 | 81.64 | 88.00 | 85.5 | 81.79 | 85.35 |
| Pigment | 13.63 | 21.86 | 16.23 | 20.20 | 17.00 | 10.71 | 11.73 | 18.36 | 12.00 | 14.50 | 18.21 | 14.65 |
| Test Results | | | | | | | | | | | | |
| Viscosity (mPa.s) | 2410 | 1920 | 2150 | 2140 | 2260 | 2300 | 2440 | 2780 | 2420 | 2180 | 2300 | 2265 |
| MEK (rubs) | 200+ | 200+ | 200+ | 200+ | 200+ | 200+ | 170<br>200 | 200+ | 130<br>190 | 200+ | 200+ | 200+ |
| Release From Matrix Material | pass | pass | slight zipper | pass | pass | pass | pass | pass | pass | pass | pass | pass |
| Adhesion to outer primary Coating | good | good | good | good | good | good | good | good | good | good | good | good |
| RAU in $N_2$ (%) | 75 | 74 | 77 | 83 | 84 | 83 | 81 | 83 | 80 | 81 | 79 | 79 |
| RAU in $O_2$ (%) | 73 | 67 | 73 | 79 | 78 | 79 | 77 | 78 | 75 | 77 | 75 | 75 |

Average RAU in $N_2$ (%) was 80

Average RAU in air %) was 76.

Table 5

| Component (weight % based on total weight of composition) | White | Red | Violet | Yellow | Rose | Black | Slate | Orange | Blue | Green | Brown | Aqua |
|---|---|---|---|---|---|---|---|---|---|---|---|---|
| Radiation-Curable Carrier System (A) | 85.01 | 75.96 | 82.14 | 77.78 | 81.30 | 88.22 | 87.10 | 79.81 | 86.80 | 84.05 | 79.97 | 83.14 |
| Pigment | 14.99 | 24.04 | 17.86 | 22.22 | 18.70 | 11.78 | 12.90 | 20.19 | 13.2 | 15.95 | 20.03 | 16.86 |
| Test Results | | | | | | | | | | | | |
| Viscosity (mPa.s) | 2420 | 1980 | 2120 | 2250 | 2260 | 2280 | 2474 | 2300 | 2370 | 2260 | 2200 | 2320 |
| MEK (rubs) | 200+ | 200+ | 200+ | 200+ | 200+ | 200+ | 200+ | 200+ | 200+ | 200+ | 200+ | 200+ |
| Release From Matrix Material | pass | pass | pass | pass | pass | pass | pass | pass | pass | pass | pass | pass |
| Adhesion to- outer primary Coating | good | good | good | good | good | good | good | good | good | good | good | good |
| RAU in $N_2$ (%) | 87 | 81 | 87 | 85 | 87 | 88 | 89 | 87 | 89 | 86 | 88 | 89 |
| RAU in air (%) | 80 | 69 | 74 | 74 | 78 | 78 | 79 | 75 | 78 | 76 | 74 | 79 |

Average RAU in $N_2$ was 87; average RAU in air (%) was 79

Table 6

| Test Results | White | Red | Violet | Yellow | Rose | Black | Slate | Orange | Blue | Green | Brown | Aqua |
|---|---|---|---|---|---|---|---|---|---|---|---|---|
| MEK (rubs) | 200 | 200 | 155 | 108 | 200 | 180 | 155 | 145 | 133 | 200 | 185 | 135 |
| Release From Matrix Material | poor | poor | poor | poor | poor | poor | poor | poor | poor | porr | poor | poor |
| Adhesion to outer primary Coating | good | good | good | good | good | good | good | good | good | good | good | good |
| RAU in $N_2$ (%) | 69 | 71 | 70 | 74 | 78 | 80 | 78 | 79 | 70 | 74 | 74 | 65 |
| RAU in air (%) | 54 | 68 | 74 | 72 | 73 | 78 | 77 | 77 | 57 | 75 | 73 | 56 |

Average RAU in $N_2$ (%) was 74

Average RAU in air (%) was 70

By comparing the test results of Tables 4 and 5 with Table 6, it can be easily observed that the presence of a

suitable photoinitiator provided a dramatic increase in the average %RAU, when curing in the presence and absence of oxygen. It can also be observed that the presence of a suitable photoinitiator provided the ink coating with good adhesion to the outer primary coating in combination with providing good release from the matrix material even when cured at a low irradiation dose. Thus, the ink coatings formed according to the present invention are suitable for use in a ribbon assembly when break-out of the individual coated optical glass fibers is desired.

Example IV

An ink coating composition was prepared by mixing the following components:

| Component: | Percent by weight of total composition: |
|---|---|
| Ebecryl 3700 (epoxy acrylate) | 51.0 |
| alkoxylated aliphatic diacrylate | 30.0 |
| Irgacure 819[1] | 1.0 |
| Irgacure 907 | 3.0 |
| Benzophenone | 4.0 |
| Blue pigment (Penn Color) | 1.5 |
| BYK 333[2] | 0.5 |

[1] Irgacure 819 is supplied by Ciba Geigy

[2] BYK 333 is a polyether modified dimethyl polysiloxane.

Example v

Another ink coating composition was prepared by mixing the following components:

| Component: | Percent by weight of total composition: |
|---|---|
| polyether urethane acrylate: PTMG / TDI / HEA[1] | 60.0 |
| ethoxylated bisphenol-A diacrylate | 25.0 |
| N-vinyl caprolactam | 25.0 |
| trimethylolpropanetri-acrylate | 4.0 |
| Lucirin TPO[2] | 2.0 |
| Benzophenone | 3.5 |
| Blue pigment (Penn Color) | 1.5 |
| silicone oil[3] | 0.5 |

[1] reaction product of polytetramethylene glycol, toluene diisocyanate and hydroxyethyl acrylate

[2] 2,4,6-trimethylbenzoyldiphenylphosphine oxide [Lucirin TPO by BASF]

[3] silicone oil = Dow Corning 57/Dow Corning 190 mixture, whereby Dow Corning 57: polyether modified dimethyl polysiloxane, and Dow Corning 190: siliconeglycol copolymer

To test the ink compositions, glass plates were coated with a 75 micron thick, outer primary coating which was cured with a D-lamp (1 J/cm$^2$). Next, the 75 micron thick drawdowns of the ink compositions, shown in examples IV and V, were applied to coated glass plates, and then irradiated with ultraviolet light by a combination of a D lamp with an energy of 1000 mJ/cm$^2$ in the wavelength area up to 450 nm and a H lamp with an energy of 500 mJ/cm$^2$ in the wavelength area from 200 to 400 nm to produce cured ink films.

With these test plates, the adhesion of the ink to the outer primary coating was determined.

In order to test the adhesion (or break-out) of the matrix material from the inks, coated and inked glass plates were used, and a matrix material was coated thereon. The matrix was cured with a D-lamp at 1 J/cm$^2$.

The energy output of the D and the H lamp were measured by a EIT UV-cure light bug.

The cured inks, described in the examples IV and V, showed a good adhesion to the outer primary coating, and the matrix showed a good break-out from the ink layers.

Test procedures

The adhesion strenght of the cured ink coating and peelability of the matrix material were measured using the following methods:

(1) Adhesion strenght

The ink compositions, as were applied to an outer primary coating, were cut into with a knife in order to evaluate whether a good adhesion was obtained or not. A good adhesion was denoted as (+), a bad adhesion as (-); intermediate values were given ratings with (+) and (-).

(2) Peelability test

The peelability of the matrix material from the ink composition was judged. The cured films were cut into with a knife in order to evaluate whether a good break-out was obtained or not. The peelability of the matrix material from the ink layer was evaluated by observation of the samples using the naked eye and touching the samples with the finger to examine the presence or absence of residues of the matrix on the ink layer. If neither observation confirmed any residues remaining on the ink coating when pulling away the matrix/ribbon material, the peelability was judged as good (+); if the presence of the matrix was confirmed or if the ink layer remained to the matrix, the peelability was judged as bad (-).

The following test examples were studied and the results of the test procedures are given in Table 7:

Comparitive example B:

The composition of Example II without benzophenone.

Example V: as described above

Example VI:

The composition of Example V + 3% Ebecryl 350 wherein Ebecryl 350 (UCB-Radcure) is an acrylated silicone (difunctional).

Example VII

The composition, which can be used as a colored outer primary coating, was prepared by mixing the following ingredients.

| Component: | Percent by weight of total composition: |
|---|---|
| polyester based urethane acrylate | 22 |
| polyether based urethane acrylate | 20 |
| isobornyl acrylate | 14 |
| ethoxylated TMPTA | 17 |
| ethoxylated bisphenol A diacrylate | 16 |
| Irgacure 907 | 3 |
| Irgacure 819 | 1 |
| Blue pigment (Penn Color) | 1 |
| Titanium dioxide | 2 |
| 1,6-nexamethylene diacrylate | 3 |
| benzophenone | 4 |

Table 7

| | Release (of the matrix from the ink) | Adhesion (of the ink to the outer primary coating) |
|---|---|---|
| B | - - - | + |

Table continued

| | Release (of the matrix from the ink) | Adhesion (of the ink to the outer primary coating) |
|---|---|---|
| V | ++ | + - |
| VI | ++ | + - - |
| VII | ++ | + - |

The use of benzophenone alone results in a good break-out. Ebecryl 350 does not improve this substantially, but nevertheless, decreases the adhesion of the ink coating to the outer primary coating. In other words, it is preferred not to use considerable amounts of release agents (such as Ebecryl 350) as this reduces the adhesion strength of the ink coating on the outer primary coating.

Furthermore, these experiments show that benzophenone substantially improves the break-out of the matrix material from different ink types.

Example VIII

75 micron thick drawdowns of two commercially available radiation-curable outer primary coating compositions were cured on Mylar sheets by exposure to 1.0 J/cm$^2$ UV radiation to form outer primary films. Samples were made by cutting the cured films into 2 inch by 2 inch squares. The samples were then placed in a desiccator for a minimum of 15 minutes. The initial weight of each of the samples was measured. 3 samples were submerged into each of eight different monomers and weighed at intervals of 1 second, 5 seconds, 10 seconds and 30 seconds (total elapsed time). The percent weight change of each of the samples and the average weight change of the three samples for each monomer was calculated and the results are shown in Table 8.

Table 8

| | Commercial Outer Primary Coating No. 1 | | | | Commercial Outer Primary Coating No. 2 | | | |
|---|---|---|---|---|---|---|---|---|
| | Percent Change In Weight After 30 Seconds | | | | Percent Change in Weight After 30 Seconds | | | |
| Monomer | Samp. 1 | Samp. 2 | Samp. 3 | Average | Samp. 1 | Samp. 2 | Samp. 3 | Average |
| HDDA | +.58 | +.58 | +.39 | +.52 | +.52 | +.58 | +.39 | +.5 |
| BPAEDA | +.8 | +1.13 | +1.14 | +1.02 | +.46 | +.37 | +.33 | +.39 |
| SA1002 | +1.03 | +.46 | +.64 | +.71 | +.98 | +.26 | +.75 | +.66 |
| IBOA | +.25 | +.37 | +.26 | +.29 | +.43 | +.25 | +.11 | +.26 |
| SR504A | +1.14 | +.87 | +.19 | +.73 | +.14 | +.48 | +.27 | +.3 |
| PEA | +.8 | +.88 | +.93 | +.87 | +.85 | +.56 | +.37 | +.59 |
| n-Vinyl Formamide | +2.32 | +2.91 | +3.11 | +2.78 | +2.71 | +2.72 | +3.21 | +2.88 |
| IDA | +.23 | +.25 | +.30 | +.30 | +.14 | +.11 | +.33 | +.19 |
| | Percent Change in Weight After 10 Seconds | | | | Percent Change in Weight After 10 Seconds | | | |
| Monomer | Samp. 1 | Samp. 2 | Samp. 3 | Average | Samp. 1 | Samp. 2 | Samp. 3 | Average |
| HDDA | +.55 | +.75 | +.22 | +.51 | +.72 | +.38 | +.55 | +.55 |
| BPAEDA | +1.24 | +.65 | +.58 | +.82 | +.33 | +.44 | +.3 | +.36 |

| | | | | | | | | |
|---|---|---|---|---|---|---|---|---|
| SA1002 | +.53 | +.46 | +.38 | +.46 | +.29 | +.33 | +.82 | +.48 |
| IBOA | +.31 | +.35 | +.29 | +.32 | +.24 | +.03 | +.5 | +.26 |
| SR504A | +.76 | +.33 | +.31 | +.53 | +.09 | +.42 | +.27 | +.26 |
| PEA | +.74 | +.38 | +.55 | +.66 | +.75 | +.32 | +.42 | +.5 |
| n-Vinyl Formamide | +1.69 | +2.31 | +2.54 | +2.18 | +1.97 | +1.96 | +2.62 | +2.18 |
| IDA | +.26 | +.28 | +.30 | +.28 | +.14 | +.08 | +.18 | +.13 |

| | Percent Change in Weight After 5 Seconds | | | | Percent Change in Weight After 5 Seconds | | | |
|---|---|---|---|---|---|---|---|---|
| Monomer | Samp. 1 | Samp. 2 | Samp. 3 | Average | Samp. 1 | Samp. 2 | Samp. 3 | Average |
| HDDA | +.78 | +.54 | +.27 | +.53 | +.8 | +.61 | +.71 | +.71 |
| BPAEDA | +.93 | +1.07 | +.74 | +.91 | +.26 | +.37 | +.33 | +.32 |
| SA1002 | +.87 | +.46 | +.29 | +.54 | +.53 | +.51 | +.58 | +.54 |
| IBOA | +.2 | +.32 | +.19 | +.24 | +.34 | +.34 | +.22 | +.3 |
| SR504A | +1.83 | +.76 | +.31 | +.97 | +.26 | +.28 | +.27 | +.27 |
| PEA | +.67 | +.41 | +.24 | +.44 | +.5 | +.6 | +.48 | +.53 |
| n-Vinyl Formamide | +1.13 | +1.92 | +1.69 | +1.58 | +1.44 | +1.34 | +2.02 | +1.6 |
| IDA | +.2 | +.14 | +.15 | +.16 | +.21 | +.14 | +.22 | +.19 |

| | Percent Change in Weight After 1 Second | | | | Percent Change in Weight After 1 Second | | | |
|---|---|---|---|---|---|---|---|---|
| HDDA | +.45 | +.4 | +.17 | +.34 | +.88 | +.46 | +.39 | +.58 |
| BPAEDA | +.65 | +1.1 | +1.07 | +.94 | +.26 | +.3 | +.33 | +.3 |
| SA1002 | +.87 | +.62 | +.44 | +.94 | +.37 | +.29 | +.58 | +.41 |
| IBOA | +.28 | +.4 | +.42 | +.37 | +.3 | +.28 | +.11 | +.23 |
| SR504A | +1.03 | +.64 | +.31 | +.66 | +.26 | +.11 | +.17 | +.18 |
| PEA | +.43 | +.24 | +.38 | +.35 | +.46 | +.35 | +.34 | +.38 |
| n-Vinyl Formamide | +.59 | +.73 | +.98 | +.77 | +.49 | +.59 | +1.05 | +.71 |
| IDA | +.2 | +.25 | +.11 | +.19 | +.14 | +.14 | +.15 | +.14 |

The test results in Table 8 demonstrate that the monomers present in radiation-curable ink compositions exhibit different levels of adsorption into different commercially available outer primary coatings. In general, the greater the adsorption into the outer primary coating, the greater the resulting adhesion between the cured ink coating and the outer primary coating.

**Test Procedures**

**%RAU**

This is an FTIR method for determining the degree of cure on the surface of a coating to a depth of 1 to 3 μm, following exposure to a predetermined dose of UV radiation. A drawdown of the sample material is first formed on a glass plate. The drawdown is then exposed to the predetermined dose of UV radiation to cure the drawdown and form a coating. The coating is cut into strips, approximately 10 mm by 50 mm.

An infrared spectrum of the uncured, liquid sample and an infrared spectrum of the cured sample are obtained. Infrared spectrometry is now well known and any infrared spectrometer can be utilized to obtain the infrared spectrum.

The net peak area of the acrylate unsaturation absorbance for the uncured liquid sample is measured. For most acrylate-based coatings, the absorbance at about 810 $cm^{-1}$ should be used. However, if the coating contains a siloxane or other component which absorbs strongly at or near 810 $cm^{-1}$ , an alternative acrylate absorbance peak can be used. The absorbances at about 1410 $cm^{-1}$ and about 1635 $cm^{-1}$ have been found to be satisfactory. The net peak area can be measured using the well known baseline technique in which a baseline is drawn tangent to absorbance minima on either side of the peak. The area above the baseline and under the peak is the net peak area.

A reference area is then determined. The reference absorbance should not change in intensity as the liquid sample is cured. Many formulations have an absorbance in the range of about 780 to about 750 $cm^{-1}$ that can be used as a reference absorbance. The net peak area of the reference absorbance is measured.

The ratio of the acrylate absorbance to the reference absorbance for the uncured, liquid sample is determined using the following formula:

$$R_L = A_{AL} / A_{RL}$$

where
$A_{AL}$ is the net peak area of the acrylate absorbance,
$A_{RL}$ is the net peak area of the reference absorbance, and
$R_L$ is the area ratio for the liquid sample.

The ratio of the acrylate absorbance to the reference absorbance for the cured sample is determined using the following formula:

$$R_C = A_{AC} / A_{RC}$$

where
$A_{AC}$ is the net peak area of the acrylate absorbance,
$A_{RC}$ is the net peak area of the reference absorbance, and
$R_C$ is the area ratio for the cured sample.

The degree of cure as a percent reacted acrylate unsaturation (%RAU) is determined using the following formula:

$$\%RAU = [(R_L - R_C) \times 100\%] / R_L$$

**MEK rub Test**

The test procedures described in ASTM D 4752 was followed with the following exception. Light finger pressure was used on the material being rubbed against the test sample.

While the claimed invention has been described in detail and with reference to specific embodiments thereof,

it will be apparent to one of ordinary skill in the art that various changes and modifications can be made to the claimed invention without departing from the scope thereof.

## Claims

1. A radiation-curable ink coating composition adapted to provide a color coding to a coated optical glass fiber comprising

    a) an oligomer having at least one radiation curable group
    b) a reactive diluent
    c) at least about 1 wt.% of homolytic photoinitiator for radical polymerisation
    d) a pigment, and
    e) additives

    wherein the composition comprises more than 2 weight% of a benzophenone-type compound, wherein said weight% is with respect to the total weight of said radiation-curable ink composition.

2. A composition according to claim 1, wherein more than 3 weight% of a benzophenone-type compound is present.

3. A composition according to any of claim 1 or 2, wherein the benzophenone-type compound is an organic compound with a molecular weight between 170 and 500, consisting essentially of benzophenone or a subtituted benzophenone group.

4. A radiation-curable ink coating composition according to any of claims 1-3, wherein the benzophenone-type compound is not a ring-bonded benzophenone.

5. A composition according to any one of claims 1-4, wherein less than 0.1 weight% of an amine is present.

6. A composition according to any one of claims 1-5, wherein the homolytic photoinitiator is represented by formula (1),

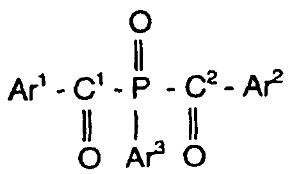

(1)

    wherein:

    Ar represents a carbon containing compound having at least one aromatic functional group;
    P is bonded directly to an aromatic functional group present in Ar3;
    C1 is bonded directly to an aromatic functional group present in Ar1; and
    C2 is bonded directly to an aromatic functional group present in Ar2, and

    wherein at least one of the carbon containing compounds Ar has a molecular weight and molecular structure that is capable of forming at least one of the following free-radicals upon exposure to ultraviolet radiation:

    $Ar^1$-$C^1$O•;

    $Ar^2$-$C^2$O•;

    or

    $Ar^3$-PO•.

7. A composition according to claim 6, wherein the homolytic photoinitiator is represented by formula (2),

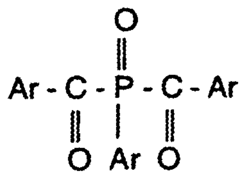

(2)

wherein Ar is a phenyl group, optionally substituted with one to three alkyl groups having 1-4 carbon atoms.

**8.** A composition according to any one of claims 1-7, wherein compound e) comprises at least a lubricant.

**9.** A radiation-curable ink composition according to any one of claims 1-8, adapted for coating optical glass fibers and being formulated from a composition comprising:

from about 20 to about 70 weight % of at least one radiation-curable oligomer;
from about 5 to about 80 weight % of at least one radiation-curable diluent;
from about 4 to about 20 weight % of a homolytic photoinitiator;
from about 1 to about 20 weight % of a pigment; and more than about 2 weight % of a benzophenone-type compound.

**10.** A method for curing an ink composition according to any one of claims 1-9 on a coated optical fiber, wherein the composition is cured with a combination of a D and a H lamp.

**11.** A coated and colored optical glass fiber, comprising:

an optical glass fiber;
an inner primary coating adjacent to the surface of said optical glass fiber;
an outer primary coating adjacent to the surface of said inner primary coating; and
an ink coating adjacent to the surface of said outer primary coating, wherein the ink coating is the cured ink coating composition, according to any one of claims 1-9.

**12.** A coated and colored optical glass fiber, comprising:

an optical glass fiber;
an inner primary coating adjacent to the surface of said optical glass fiber;
a colored outer primary coating adjacent to the surface of said inner primary coating wherein the outer primary coating is the cured ink coating composition according to any one of claims 1-9.

**13.** A glass fiber according to anyone of claims 11-12, wherein the cured ink coating composition comprises a percent reacted acrylate unsaturation of at least 70% when the composition is cured by exposure to a radiation dose of 0.125 joules square centimeter.

**14.** A glass fiber according to claim 13, wherein the cured ink coating composition comprises a percent reacted acrylate unsaturation of at least 75%.

**15.** A ribbon assembly comprising:

a plurality of coated optical glass fibers; and
a matrix material which binds said plurality of coated optical glass fibers together, wherein at least one of said coated optical glass fibers comprises a coated and colored optical glass fiber according to anyone of claims 11-14.

## Revendications

**1.** Composition de revêtement d'encre durcissable par irradiation, destinée à donner un codage coloré à une fibre de verre optique enrobée, comprenant

a) un oligomère comportant au moins un groupe durcissable par irradiation,
b) un diluant réactif
c) au moins environ 1 % en poids d'un photoamorceur homolytique pour polymérisation radicalaire
d) un pigment, et
e) des additifs

dans laquelle la composition comprend plus de 2 % en poids d'un composé de type benzophénone, ledit pourcentage en poids étant par rapport au poids total de ladite composition d'encre durcissable par irradiation.

**2.** Composition selon la revendication 1, dans laquelle sont présents plus de 3 % en poids d'un composé de type benzophénone.

**3.** Composition selon la revendication 1 ou 2, dans laquelle le composé de type benzophénone est un composé organique ayant une masse moléculaire comprise entre 170 et 500, et consistant essentiellement en benzophénone ou en un groupe benzophénone substitué.

**4.** Composition de revêtement d'encre durcissable par irradiation selon l'une quelconque des revendications 1 à 3, dans laquelle le composé de type benzophénone n'est pas une benzophénone liée à un cycle.

**5.** Composition selon l'une quelconque des revendications 1 à 4, dans laquelle est présent moins de 0,1 % en poids d'une amine.

**6.** Composition selon l'une quelconque des revendications 1 à 5, dans laquelle le photoamorceur homolytique est représenté par la formule (I)

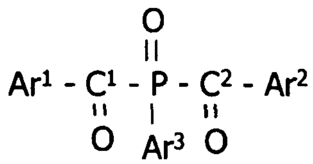

(1)

dans laquelle :

Ar représente un composé carboné comportant au moins un groupe fonctionnel aromatique ;
P est lié directement à un groupe fonctionnel aromatique présent dans $Ar^3$ ;
$C^1$ est lié directement à un groupe fonctionnel aromatique présent dans $Ar^1$ ; et
$C^2$ est lié directement à un groupe fonctionnel aromatique présent dans $Ar^2$, et

dans laquelle au moins l'un des composés carbonés Ar a une masse moléculaire et une structure moléculaire capables, lors d'exposition à un rayonnement ultraviolet, de former au moins l'un des radicaux libres suivants :

$Ar^1$-$C^1$O• ;

$Ar^2$-$C^2$O• ;

ou

$Ar^3$-PO•.

**7.** Composition selon la revendication 6, dans laquelle le photoamorceur homolytique est représenté par la formule (2),

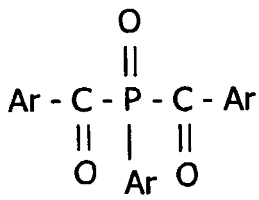

(2)

dans laquelle Ar est un groupe phényle éventuellement substitué par un à trois groupes alkyle ayant de 1 à 4 atomes de carbone.

**8.** Composition selon l'une quelconque des revendications 1 à 7, dans laquelle le composé e) comprend au moins un lubrifiant.

**9.** Composition de revêtement d'encre durcissable par irradiation selon l'une quelconque des revendications 1 à 8, destinée au revêtement de fibres de verre optiques et étant formulée à partir d'une composition comprenant :

d'environ 20 à environ 70 % en poids d'au moins un oligomère durcissable par irradiation ;
d'environ 5 à environ 80 % en poids d'au moins un diluant durcissable par irradiation ;
d'environ 4 à environ 20 % en poids d'un photoamorceur homolytique ;
d'environ 1 à environ 20 % en poids d'un pigment ; et
plus d'environ 2 % en poids d'un composé de type benzophénone.

**10.** Procédé pour le durcissement d'une composition d'encre selon l'une quelconque des revendications 1 à 9 sur une fibre optique revêtue, dans lequel la composition est durcie avec une combinaison d'une lampe D et d'une lampe H.

**11.** Fibre de verre optique revêtue et colorée, comprenant :

une fibre de verre optique ;
un revêtement primaire interne adjacent à la surface de ladite fibre de verre optique ;
un revêtement primaire externe adjacent à la surface dudit revêtement primaire interne ; et
un revêtement d'encre adjacent à la surface dudit revêtement primaire externe, le revêtement d'encre étant la composition de revêtement d'encre durcie selon l'une quelconque des revendications 1 à 9.

**12.** Fibre de verre optique revêtue et colorée, comprenant :

une fibre de verre optique ;
un revêtement primaire interne adjacent à la surface de ladite fibre de verre optique ;
un revêtement primaire externe coloré adjacent à la surface dudit revêtement primaire interne, le revêtement primaire externe étant la composition de revêtement d'encre durcie selon l'une quelconque des revendications 1 à 9.

**13.** Fibre de verre selon la revendication 11 ou 12, dans laquelle la composition de revêtement d'encre durcie comprend un pourcentage d'insaturation d'acrylate ayant réagi d'au moins 70 %, quand la composition est durcie par exposition à une dose d'irradiation de 0.125 joule par $cm^2$.

**14.** Fibre de verre selon la revendication 13, dans laquelle la composition de revêtement d'encre durcie comprend un pourcentage d'insaturation d'acrylate ayant réagi d'au moins 75 %.

**15.** Ensemble sous forme de ruban comprenant :

plusieurs fibres de verre optiques revêtues ; et
une matière de matrice qui lie entre elles lesdites plusieurs fibres de verre optiques revêtues,

dans lequel au moins l'une desdites fibres de verre optiques revêtues comprend une fibre de verre optique revêtue et colorée selon l'une quelconque des revendications 11 à 14.

## Patentansprüche

1. Durch Strahlung härtbare Tintenbeschichtungszusammensetzung, die eingerichtet ist, eine beschichtete optische Glasfaser mit einer Farbkodierung zu versehen, umfassend

    a) ein Oligomer mit mindestens einer durch Strahlung härtbaren Gruppe,
    b) ein reaktives Verdünnungsmittel,
    c) mindestens etwa 1 Gew.-% eines homolytischen Photoinitiators zur radikalischen Polymerisation,
    d) ein Pigment und
    e) Additive,

    wobei die Zusammensetzung mehr als 2 Gew.-% einer Verbindung vom Benzophenon-Typ umfaßt, wobei die Gew.-Prozente bezüglich des Gesamtgewichts der durch Strahlung härtbaren Tintenzusammensetzung sind.

2. Zusammensetzung gemäß Anspruch 1, wobei mehr als 3 Gew.-% einer Verbindung vom Benzophenon-Typ vorliegt.

3. Zusammensetzung nach einem der Ansprüche 1 oder 2, wobei die Verbindung vom Benzophenon-Typ eine organische Verbindung mit einem Molekulargewicht von zwischen 170 und 500 ist, bestehend im wesentlichen aus Benzophenon oder einer substituierten Benzophenon-Gruppe.

4. Durch Strahlung härtbare Tintenbeschichtungszusammensetzung gemäß einem der Ansprüche 1 bis 3, wobei die Verbindung vom Benzophenon-Typ nicht ein Ring-gebundenes Benzophenon ist.

5. Zusammensetzung gemäß einem der Ansprüche 1 bis 4, wobei weniger als 0,1 Gew.% eines Amins vorliegt.

6. Zusammensetzung gemäß einem der Ansprüche 1 bis 5, wobei der homolytische Photoinitiator durch Formel (1) dargestellt ist

    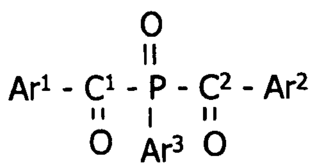 (1)

    worin
    Ar eine Kohlenstoff-enthaltende Verbindung mit mindestens einer aromatischen funktionalen Gruppe darstellt,
    P direkt an eine aromatische funktionale Gruppe, vorliegend in Ar3, gebunden ist,
    C1 direkt an eine aromatische funktionale Gruppe, vorliegend in Ar1, gebunden ist und
    C2 direkt an eine aromatische funktionale Gruppe, vorliegend in Ar2, gebunden ist, und wobei mindestens eine der Kohlenstoff-enthaltenden Verbindungen Ar ein Molekulargewicht und Molekülstruktur mit der Befähigung aufweist, mindestens eines der folgenden freien Radikale nach Aussetzung ultravioletter Strahlung zu bilden,

    $Ar^1$-$C^1$O•

    $Ar^2$-$C^2$O•

    oder

    $Ar^3$-PO•.

7. Zusammensetzung gemäß Anspruch 6, wobei der homolytische Photoinitiator durch Formel (2) dargestellt ist

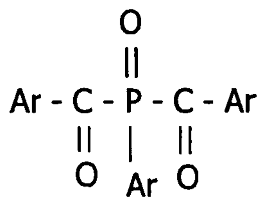

(2)

worin Ar eine Phenylgruppe, gegebenenfalls substituiert mit einem bis drei Alkylresten mit 1-4 Kohlenstoffatomen, ist.

8. Zusammensetzung gemäß einem der Ansprüche 1 bis 7, wobei Verbindung e) mindestens ein Schmiermittel umfaßt.

9. Durch Strahlung härtbare Tintenzusammensetzung gemäß einem der Ansprüche 1 bis 8, eingerichtet zum Beschichten von optischen Glasfasern und aus einer Zusammensetzung formuliert, umfassend:

   von etwa 20 bis etwa 70 Gew.-% von mindestens einem durch Strahlung härtbaren Oligomer,
   von etwa 5 bis etwa 80 Gew.% von mindestens einem durch Strahlung härtbaren Verdünnungsmittel,
   von etwa 4 bis etwa 20 Gew.-% eines homolytischen Photoinitiators,
   von etwa 1 bis etwa 20 Gew.-% eines Pigments, und
   mehr als etwa 2 Gew.% einer Verbindung vom Benzophenon-Typ.

10. Verfahren zum Härten einer Tintenzusammensetzung gemäß einem der Ansprüche 1 bis 9 auf einer beschichteten optischen Faser, wobei die Zusammensetzung mit einer Kombination von einer D- und einer H-Lampe gehärtet wird.

11. Beschichtete und gefärbte optische Glasfaser, umfassend
eine optische Glasfaser,
eine innere Primärbeschichtung angrenzend an die Oberfläche der optischen Glasfaser,
eine äußere Primärbeschichtung angrenzend an die Oberfläche der inneren Primärbeschichtung und
eine Tintenbeschichtung angrenzend an die Oberfläche der äußeren Primärbeschichtung, wobei die Tintenbeschichtung die gehärtete Tintenbeschichtungszusammensetzung gemäß einem der Ansprüche 1 bis 9 ist.

12. Beschichtete und gefärbte optische Glasfaser, umfassend
eine optische Glasfaser,
eine innere Primärbeschichtung angrenzend an die Oberfläche der optischen Glasfaser,
eine gefärbte äußere Primärbeschichtung angrenzend an die Oberfläche der inneren Primärbeschichtung, wobei die äußere Primärbeschichtung die gehärtete Tintenbeschichtungszusammensetzung gemäß einem der Ansprüche 1 bis 9 ist.

13. Glasfaser gemäß einem der Ansprüche 11 oder 12, wobei die gehärtete Tintenbeschichtungszusammensetzung einen Prozentanteil an reagierter Acrylat-Ungesättigtheit von mindestens 70% umfaßt wenn die Tintenbeschichtungszusammensetzung gehärtet ist nach aussetzung zu einer Härtungdosis von 0.125 Joules pro Qaudratzentimeter.

14. Glasfaser gemäß Anspruch 13, wobei die gehärtete Tintenbeschichtungszusammensetzung einen Prozentanteil an reagierter Acrylat-Ungesättigtheit von mindestens 75% umfaßt.

15. Bandeinheit, umfassend:

   eine Vielzahl beschichteter optischer Glasfasern und
   ein Matrixmaterial, welches die Vielzahl beschichteter optischer Glasfasern miteinander verbindet, wobei mindestens eine der beschichteten optischen Glasfasern eine beschichtete und gefärbte optische Glasfaser gemäß Anspruch 10 bis 14 umfaßt.